# EUROPÄISCHE PATENTSCHRIFT

(11) **EP 3 609 808 B1**
(45) Veröffentlichungstag und Bekanntmachung des Hinweises auf die Patenterteilung: **30.06.2021**
(21) Anmeldenummer: 18712816.0
(22) Anmeldetag: 12.03.2018
(51) Int. Cl.: B65D 83/00, B29C 45/16, B05B 11/00

(54) **SPENDERBEHÄLTER**
DISPENSER CONTAINER
CONTENANT DISTRIBUTEUR

(30) Priorität: 19.09.2017 DE 102017121702
(43) Veröffentlichungstag der Anmeldung: 19.02.2020
(73) Patentinhaber: INOTECH Kunststofftechnik GmbH, 92507 Nabburg (DE)
(72) Erfinder: GLEIXNER, Josef, 92507 Nabburg (DE)
(74) Vertreter: Glück Kritzenberger Patentanwälte PartGmbB
(86) Internationale Anmeldenummer: PCT/EP2018/056090
(87) Internationale Veröffentlichungsnummer: WO 2019/057344

(56) Entgegenhaltungen:
- EP-A1- 1 510 472
- EP-A1- 1 510 472
- WO-A1-00/48925
- WO-A1-00/48925
- DE-A1-102014 113 535
- DE-A1-102014 113 535
- US-A1- 2012 279 995
- US-A1- 2012 279 995

## Beschreibung

Die Erfindung betrifft einen Spenderbehälter bestehend aus einem Außenbehälter und einem Innenbehälter zum Aufnehmen eines Fluids, wobei der Außenbehälter und der Innenbehälter aus blasgeformten Kunststoffen gebildet sind, die keine stoffschlüssige Verbindung miteinander eingehen, und ein erster Kunststoff, aus dem der Innenbehälter gebildet ist, eine höhere Elastizität als ein zweiter Kunststoff, aus dem der Außenbehälter gebildet ist, aufweist, so dass der Innenbehälter verformbar ist, und wobei der Außenbehälter wenigstens eine Druckausgleichsöffnung zum Druckausgleich im Bereich zwischen dem Außenbehälter und dem Innenbehälter aufweist.

Es sind aus dem Stand der Technik derartige Spenderbehälter bekannt, beispielsweise aus der DE 10 2014 113 535 A1, wobei bei diesem Spenderbehälter durch Entnahme von Fluid aus dem Innenbehälter ein Unterdruck erzeugt wird, welcher durch eine Druckausgleichsöffnung im Außenbehälter kompensiert wird, und wobei der Innenbehälter im Bodenbereich beziehungsweise dem Mittelbereich deformiert wird, wobei durch die Druckausgleichsöffnung im Bodenbereich Schmutzpartikel und Schadpartikel in den Spenderbehälter eindringen können, wodurch der Spenderbehälter beschädigt werden kann.

US 2012/0279995 A1 zeigt Abgabevorrichtung umfassend ein Gehäuse, das einen komprimierbaren Behälter zumindest teilweise umgibt. Der Behälter enthält ein erstes Laschenelement, das von einem ersten Laschenempfänger in einer Wand des Gehäuses aufgenommen wird. Die Abgabevorrichtung gibt Material durch ein offenes Ende des Behälters als Reaktion auf eine Druckkraft ab. Wenn der Behälter komprimiert wird, verlässt das erste Laschenelement den ersten Laschenempfänger und tritt in einen zweiten Laschenempfänger ein, der sich näher am Ausgabeende des Gehäuses befindet als der erste Laschenempfänger.

EP 1 510 472 A1 offenbart einen Spender bestehend aus einem Kolben mit einem inneren verformbaren Beutel für das Produkt, der aus zwei Schichten aus demselben Material oder verschiedenen Materialien besteht. Der Beutel kann einen Füllstoff aufweisen, um ihn für eine einfache Erkennung farbig oder undurchsichtig zu machen.

WO 00/48925 A1 zeigt eine Behälterverschlussvorrichtung mit einem starren Behälter mit einem offenen Ende mit einer Oberkante entlang eines zusammenklappbaren Behälters, der in dem starren Behälter angeordnet ist und ein offenes Ende aufweist. Eine Kappe ist vorgesehen, um die offenen Enden des starren und flexiblen Behälters abzudecken, und eine Stopfenversiegelung, die eine Primärdichtung zwischen dem starren Behälter und dem flexiblen Behälter bereitstellt.

Es ist demzufolge Aufgabe der vorliegenden Erfindung, ein alternatives Belüftungskonzept für einen Spenderbehälter bereitzustellen und die Nachteile des Standes der Technik zu überkommen.

Gelöst wird diese Aufgabe durch einen Spenderbehälter mit den Merkmalen des Patentanspruches 1 und durch eine Vorrichtung zur Herstellung des Spenderbehälters mit den Merkmalen des Anspruches 9.

Ein wesentlicher Punkt der Erfindung liegt darin, einen Spenderbehälter bereitzustellen, bestehend aus einem Außenbehälter und einem Innenbehälter zum Aufnehmen eines Fluids, wobei der Außenbehälter und der Innenbehälter aus blasgeformten Kunststoffen gebildet sind, die keine stoffschlüssige Verbindung miteinander eingehen und ein erster Kunststoff, aus dem der Innenbehälter gebildet ist, eine höhere Elastizität als ein zweiter Kunststoff, aus dem der Außenbehälter gebildet ist, aufweist, so dass der Innenbehälter verformbar ist, und wobei der Außenbehälter wenigstens eine Druckausgleichsöffnung zum Druckausgleich im Bereich zwischen dem Außenbehälter und dem Innenbehälter aufweist, wobei der Innenbehälter einen ersten Mündungsbereich und der Außenbehälter einen zweiten Mündungsbereich aufweisen, wobei der erste Mündungsbereich relativ zu dem zweiten Mündungsbereich in einer Mündungsrichtung verlagerbar ist.

Alternativ kann für den Begriff der Mündungsrichtung auch eine Längsrichtung verstanden werden. Vorteilhafterweise umfasst der Spenderbehälter und insbesondere jeweils der Außenbehälter und der Innenbehälter einen Bodenbereich und einen Mittelbereich, wobei jeweils der Bodenbereich mit dem Mittelbereich und der Mittelbereich mit dem Mündungsbereich verbunden sind.

Erfindungsgemäß ist der erste Mündungsbereich relativ zu dem zweiten Mündungsbereich in der Mündungsrichtung verlagerbar. Dies bedeutet, dass es zwei Zustände gibt, einen verlagerten Zustand und einen nicht-verlagerten Zustand, wobei in dem nicht-verlagerten Zustand der Innenbehälter nicht verformt ist und in dem verlagerten Zustand der Innenbehälter verformt ist.

Eine Verlagerung kann beispielsweise durch eine äußere Krafteinwirkung auf den ersten Mündungsbereich bewirkt werden, wobei durch die Verlagerungsbewegung der erste Mündungsbereich entsprechend verlagert wird und dadurch der Innenbehälter deformiert wird.

Unter dem Mündungsbereich ist insbesondere der Bereich zu verstehen, an welchem beispielsweise eine Pumpenvorrichtung zur Entnahme eines Fluids aus dem Innenbehälter angeordnet werden kann.

Gemäß einer bevorzugten Ausführungsform erstreckt sich der erste Mündungsbereich in der Mündungsrichtung zumindest teilweise weiter als der zweite Mündungsbereich.

Dies bedeutet also, dass es Abschnitte des ersten Mündungsbereiches gibt, welche sich in Mündungsrichtung weiter erstrecken als jeder Bereich des zweiten Mündungsbereiches. Insbesondere ist es vorteilhaft, wenn sich der erste Mündungsbereich als Ganzes weiter erstreckt als der zweite Mündungsbereich.

Insbesondere ist es vorstellbar, dass ein erstes Ende des ersten Mündungsbereiches weiter von dem Spenderbehälter entfernt angeordnet ist als ein entsprechendes erstes Ende des zweiten Mündungsbereiches.

Erfindungsgemäß weist der Innenbehälter auf einer Außenseite zumindest einen komplementären Vorsprung zum Verschließen der Druckausgleichsöffnung auf, welcher Vorsprung vor einer Verlagerung des ersten Mündungsbereichs relativ zu dem zweiten Mündungsbereich in die Druckausgleichsöffnung hineinragt und mit der Druckausgleichsöffnung kraftschlüssig verbunden ist und nach einer Verlagerung des ersten Mündungsbereichs der erste Vorsprung von der Druckausgleichsöffnung gelöst ist.

Dies bedeutet also, dass wenn der erste Mündungsbereich gegenüber dem zweiten Mündungsbereich verlagert ist, sich also in dem verlagerten Zustand befindet, die Druckausgleichsöffnung nicht länger verschlossen ist und daher ein Druckausgleich im Bereich zwischen dem Innenbehälter und dem Außenbehälter ermöglicht wird. Es ist daher schon ein Druckausgleich möglich, bevor überhaupt Fluid aus dem Innenbehälter entnommen wird. Aus dem Stand der Technik ist eine Belüftung bzw. ein Druckausgleich möglich, wenn ein Fluid aus dem Innenbehälter entnommen wird.

Bei Montage bzw. dem Aufprellen einer entsprechenden Pumpenvorrichtung wird daher bereits vor der ersten Benutzung der Pumpenvorrichtung ein Druckausgleich bereitgestellt.

Gemäß einer weiteren bevorzugten Ausführungsform ist die Druckausgleichsöffnung an dem zweiten Mündungsbereich angeordnet.

Insbesondere ist es auch denkbar, dass die Druckausgleichsöffnung am Übergang zwischen dem Mündungsbereich und dem Mittelbereich angeordnet ist.

Gemäß einer weiteren bevorzugten Ausführungsform weist der erste Mündungsbereich einen zweiten Vorsprung auf, welcher sich im Wesentlichen senkrecht zu der Mündungsrichtung erstreckt und in Mündungsrichtung vor der Verlagerung einen ersten Abstand zu dem zweiten Mündungsbereich aufweist und nach der Verlagerung einen zweiten Abstand zu dem zweiten Mündungsbereich aufweist, wobei der zweite Abstand kleiner als der erste Abstand ist.

Bevorzugt liegt der erste Abstand in einem Bereich von 1-10 mm.

Weiter bevorzugt beträgt der zweite Abstand höchstens 0,5 mm, bevorzugter höchstens 0,1 mm und besonders bevorzugt 0 mm.

Dadurch kann eine bessere Dichtwirkung zwischen dem Innenbehälter und dem Außenbehälter im Mündungsbereich erzielt werden, da aufgrund der Verlagerbarkeit des ersten Mündungsbereiches gegenüber dem zweiten Mündungsbereich eine gewisse Undichtigkeit vorherrscht.

Gemäß einer weiteren bevorzugten Ausführungsform weist der zweite Mündungsbereich einen dritten Vorsprung auf, welcher sich im Wesentlichen senkrecht zu der Mündungsrichtung erstreckt. Mittels des dritten Vorsprungs ist es insbesondere möglich, eine Pumpenvorrichtung an dem Spenderbehälter zu montieren. Der dritte Vorsprung dient hierzu als Teil einer Haltevorrichtung zum Halten der Pumpenvorrichtung gegenüber dem Spenderbehälter.

Weiter ist die Erfindung gerichtet auf einen Spenderbehälter mit einer Pumpenvorrichtung, wobei die Pumpeneinrichtung auf den Spenderbehälter aufprellbar ist, wobei die Pumpenvorrichtung derart ausgebildet ist, dass während des Aufprellens der Pumpenvorrichtung auf dem Spenderbehälter eine Verlagerung des ersten Mündungsbereiches relativ zu dem zweiten Mündungsbereich stattfindet.

Besonders bevorzugt ist nach dem Aufprellen der Pumpenvorrichtung auf dem Spenderbehälter der erste Mündungsbereich in dem verlagerten Zustand und wird in diesem verlagerten Zustand gehalten.

Gemäß einer bevorzugten Ausführungsform ist eine Haltevorrichtung der Pumpenvorrichtung mit einem vierten Vorsprung vorgesehen, welcher nach dem Aufprellen mit dem dritten Vorsprung wechselwirkt, insbesondere verbunden ist mittels mindestens einem ausgewählt aus der Gruppe Snap-on-, Klick-, Crimp- oder Schraubverbindung.

Weiter ist eine Vorrichtung zur Herstellung eines Spenderbehälters vorgesehen, bestehend aus einem Außenbehälter und einem Innenbehälter zum Aufnehmen eines Fluids, im Spritzblasverfahren zum Spritzgießen eines Vorformlings und zum Streckblasen des Vorformlings innerhalb derselben Vorrichtung, wobei die Vorrichtung umfasst:
a. eine Mehrkomponenten-Spritzgusseinrichtung zum Aufspritzen des aus wenigstens zwei Schichten bestehenden Vorformlings, wobei der Kunststoff der ersten Schicht keine stoffschlüssige Verbindung mit dem Kunststoff der zweiten Schicht eingeht und der Kunststoff der ersten Schicht eine höhere Elastizität als der Kunststoff der zweiten Schicht aufweist;
b. einen Spritzblaskern, auf dem die den Vorformling bildenden Schichten aufgebracht werden;
c. eine erste Kavität zur Bildung der ersten Schicht;
d. eine zweite Kavität zur Bildung einer zweiten Schicht, in welche ein Schieberkern einbringbar ist;
e. ein Schieberkern mit zumindest einem Schiebervorsprung, der in die zweite Kavität hineinragt, wobei durch den sich in der zweiten Kavität befindlichen zumindest einen Schiebervorsprung des Schieberkerns wenigstens ein Bereich in der zweiten Schicht ausgespart wird, der wenigstens eine Druckausgleichsöffnung im Außenbehälter darstellt;
f. eine Streckblaseinrichtung zum Streckblasen des durch einen Spritzgussprozess erwärmten und durch eine zum Streckblasen erforderliche Bearbeitungstemperatur aufweisenden Vorformlings zu dem Spenderbehälter,
wobei die erste Kavität und die zweite Kavität derart ausgebildet sind, so dass nach dem Streckblasen eine Verlagerung des ersten Mündungsbereichs relativ zum zweiten Mündungsbereich durchführbar ist.

Erfindungsgemäß umfasst die erste Kavität einen Vergrößerungsbereich, welcher zum Bilden des ersten Vorsprungs vorgesehen und geeignet ist, wobei der Schieberkern bei dem Vergrößerungsbereich in die zweite Kavität hineinragt, mit diesem in Kontakt steht und zum Bilden der Druckausgleichsöffnung vorgesehen und geeignet ist.

Weiter ist ein Verfahren zur Montage eines Spenderbehälters mit einer Pumpenvorrichtung vorgesehen, umfassend die Verfahrensschritte:
a. Bereitstellen des Spenderbehälters und der Pumpenvorrichtung;
b. Anordnen und Kontaktieren der Pumpenvorrichtung auf dem Spenderbehälter;
c. Ausüben einer Kraft auf die Pumpenvorrichtung entlang der Mündungsrichtung und Verlagern des ersten Mündungsbereichs relativ zum zweiten Mündungsbereich;
d. Verbinden der Pumpenvorrichtung und des Spenderbehälters.

Weiter ist es vorteilhaft, wenn der Außenbehälter und der Innenbehälter aus Thermoplasten oder Elastomeren bestehen.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den Zeichnungen zu entnehmen. Hierbei zeigen:
- Fig. 1: einen Spenderbehälter in einer perspektivischen Ansicht;
- Fig. 2A: einen Spenderbehälter gemäß einer bevorzugten Ausführungsform in einem Querschnitt;
- Fig. 2B: Ausschnitt der Fig. 2A;
- Fig. 3A: Spenderbehälter im nicht-verlagerten Zustand in einem Querschnitt;
- Fig. 3B: Ausschnitt der Fig. 3A;
- Fig. 4A: Spenderbehälter im verlagerten Zustand in einem Querschnitt;
- Fig. 4B: Ausschnitt der Fig. 4A;
- Fig. 5A: Spenderbehälter mit Pumpenvorrichtung im nicht-verlagerten Zustand in einem Querschnitt;
- Fig. 5B: Spenderbehälter mit Pumpenvorrichtung im verlagerten Zustand in einem Querschnitt.;
- Fig. 6: den Vorformling in der ersten Kavität;
- Fig. 7: den Vorformling in der zweiten Kavität mit Schieberkern;
- Fig. 8: Vorrichtung zum Herstellen des Spenderbehälters.

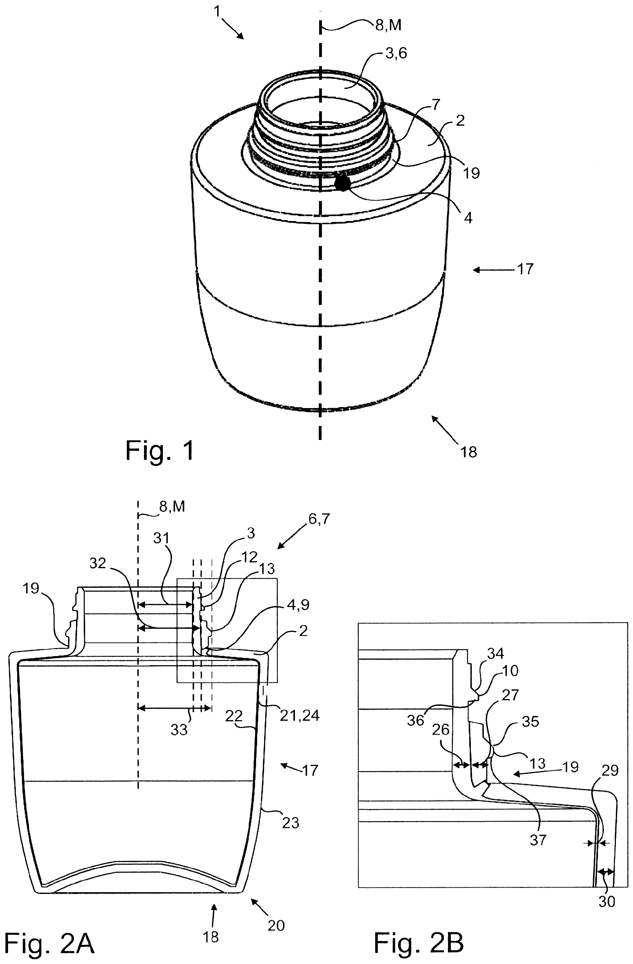

Die Figur 1 zeigt einen Spenderbehälter 1 mit einem Außenbehälter 2 und einem Innenbehälter 3 in einer perspektivischen Ansicht, wobei gemäß Figur 1 insbesondere der Außenbehälter 2 zu erkennen ist. Weiter umfassen der Außenbehälter 2 und der Innenbehälter 3 jeweils einen Mittelbereich 17 und einen Bodenbereich 18, welche im Folgenden genauer dargestellt werden.

Weiter ist ein erster Mündungsbereich 6 des Innenbehälters 3 und ein zweiter Mündungsbereich 7 des Außenbehälters 2 zu erkennen, wobei der erste Mündungsbereich 6 zumindest teilweise innerhalb des zweiten Mündungsbereiches 7 angeordnet ist, gesehen in einer Richtung senkrecht zu einer Mündungsrichtung 8.

Darüber hinaus ist ebenso eine Druckausgleichsöffnung 4 zu erkennen, welche an dem zweiten Mündungsbereich 7 angeordnet ist, wobei vorzugsweise die Druckausgleichsöffnung 4 in einem ersten Übergangsbereich 19 von dem zweiten Mündungsbereich 7 zu dem Mittelbereich 17 des Außenbehälters 2 angeordnet ist.

Die Figur 2A zeigt den Spenderbehälter 1 gemäß einer bevorzugten Ausführungsform in einer Schnittdarstellung, wobei die Figur 2B einen Ausschnitt der Figur 2A zeigt.

Wie zu erkennen ist, weist der Innenbehälter 3 eine Außenseite 21 und eine Innenseite 22 auf, wobei die Außenseite 21 des Innenbehälters 3 mit einer Innenseite 24 des Außenbehälters 2 zumindest teilweise in Kontakt steht, und wobei die Innenseite 24 mit einem Fluid in Kontakt steht. Weiter weist der Außenbehälter 2 eine Außenseite 23 auf, welche mit der Umgebung in Kontakt steht. Zwischen dem Innenbehälter 3 und dem Außenbehälter 2 ist ein Bereich 25 angeordnet, welcher hier noch nicht gezeigt ist. Der Bereich 25 entspricht hierbei einem Volumen, welches zwischen dem Außenbehälter 2 und dem Innenbehälter 3 entsteht, wenn aus dem Innenbehälter 3 Fluid entnommen wird, sich dadurch der Innenbehälter 3 verformt, insbesondere zusammenzieht bzw. verkleinert, und dadurch der Bereich 25 entsteht. Der Bereich 25 steht dabei mit der Druckausgleichsöffnung 4 in Kontakt.

Der Außenbehälter 2 weist, wie bereits erwähnt, die Druckausgleichsöffnung 4 auf, wobei der Innenbehälter 3 einen ersten Vorsprung 9 aufweist, welcher in dem nicht-verlagerten Zustand des ersten Mündungsbereichs 6 mit der Druckausgleichsöffnung 4 in Verbindung steht und diese verschließt, wobei der erste Vorsprung 9 komplementär zu der Druckausgleichsöffnung 4 ausgebildet ist.

Eine Vergrößerung des Mündungsbereichs des Spenderbehälters 1, umfassend den ersten Mündungsbereich 6 und den zweiten Mündungsbereich 7, in einem Ausschnitt ist in der Figur 2B zu erkennen.

Der erste Mündungsbereich 6 weist weiter einen zweiten Vorsprung 12 auf, welcher sich im Wesentlichen senkrecht zu der Mündungsrichtung 8 erstreckt. Der zweite Mündungsbereich 7 hingegen umfasst einen dritten Vorsprung 13, welcher in Mündungsrichtung 8 gesehen unterhalb des zweiten Vorsprungs 12 angeordnet ist.

Besonders bevorzugt ist die Druckausgleichsöffnung 4 kegelstumpfförmig ausgebildet, wobei die Deckfläche der Druckausgleichsöffnung 4 an der Außenseite 23 des Außenbehälters 2 und die Grundfläche der Druckausgleichsöffnung 4 an der Innenseite 24 des Außenbehälters 2 angeordnet ist. Zu beachten ist hierbei, dass die Deckfläche und die Grundfläche fiktiv sind, da sie eine Öffnung darstellen sollen.

Dabei kann im Bereich des Mündungsbereichs 28, welcher den ersten Mündungsbereich 6 und den zweiten Mündungsbereich 7 umfasst, des Spenderbehälters 1 eine erste Dicke 26 des Innenbehälters 3 und eine zweite Dicke des Außenbehälters 2 im Wesentlichen konstant sein. Weiter vorteilhaft ist es denkbar, dass die erste Dicke 26 und die zweite Dicke 27 der entsprechenden Mündungsbereiche 6, 7 im Wesentlichen gleich sind. Die Dicke ist hierbei jeweils senkrecht zu der Mündungsrichtung 8 zu messen, wobei etwaige Vorsprünge hierbei nicht berücksichtigt werden.

Die Dicken im Mittelbereich 17 sowie die Dicken im Bodenbereich 18 sind bevorzugt ebenfalls konstant, wobei die dritte Dicke 29 des Innenbehälters im Bereich des Mittelbereichs 17 und des Bodenbereichs und eine vierte Dicke 30 des Außenbehälters 2 im Bereich des Mittelbereichs 17 und des Bodenbereichs 18 konstant sind, wobei es vorteilhaft ist, wenn die dritte Dicke 29 kleiner ist als die vierte Dicke 30. Weiter vorteilhaft entspricht die zweite Dicke 27 der vierten Dicke 30, das heißt, dass der Außenbehälter 2 eine durchgängig konstante Wandstärke bzw. Wanddicke aufweist. Dem gegenüber ist es vorteilhaft, wenn die erste Dicke 26 größer ist als die dritte Dicke 29, das heißt, dass im Mittelbereich 17 bzw. im Bodenbereich 18 der Innenbehälter 3 dünnwandiger ausgebildet ist als im Mündungsbereich 6. Hierdurch kann sich der Innenbehälter 3 bei Entnahme von Fluid erheblich leichter zusammenziehen und verformen.

Weiter vorteilhaft verändert sich die Dicke des Innenbehälters 3 wie folgt. Im ersten Mündungsbereich 6 ist eine erste Dicke 26 vorgesehen, wohingegen im Mittelbereich 17 und im Bodenbereich 18 eine dritte Dicke 28 vorgesehen ist. Beim Übergang 19 zwischen dem Mündungsbereich 6 zu dem Mittelbereich 17 ist der Innenbehälter 3 derart ausgebildet, dass die Dicke des Innenbehälters 3 abnimmt bis zu der dritten Dicke 28. Insbesondere ist der Dickenübergang kontinuierlich ausgebildet, das heißt, ohne abrupte Sprünge in der Dicke.

Besonders vorteilhaft entspricht die Mündungsrichtung 8 ebenso einer Mittelachse M des ersten bzw. des zweiten Mündungsbereichs 6, 7, wobei die Mündungsbereiche 6, 7 im Wesentlichen zylindrisch ausgebildet sind, mit einem ersten Innenradius 31 und einem zweiten Innenradius 32. Weiter ist es bevorzugt, dass die Druckausgleichsöffnung 4 innerhalb eines Bereichs mit einer ersten Strecke 33 als Radius um die Mittelachse M angeordnet ist, wobei die erste Strecke zwischen der Mittelachse M und dem, senkrecht zur der Mittelachse M gesehen, entferntesten Punkt des dritten Vorsprungs 13 angeordnet ist.

Darüber hinaus weisen der zweite Vorsprung 10 und der dritte Vorsprung 13 jeweils einen ersten Abschnitt 34 ,35 auf, welcher im Querschnitt mit der Mittelachse M einen Winkel einschließt, wobei der Winkel in einem Bereich von 30° bis 60° liegt, bevorzugter in einem Bereich von 40° bis 50°, und bevorzugt 45° beträgt. Weiter bevorzugt können der zweite Vorsprung 10 und der dritte Vorsprung 13 jeweils einen zweiten Abschnitt 36, 37 aufweisen, welcher sich im Wesentlichen senkrecht zu der Mittelachse M im Querschnitt erstreckt.

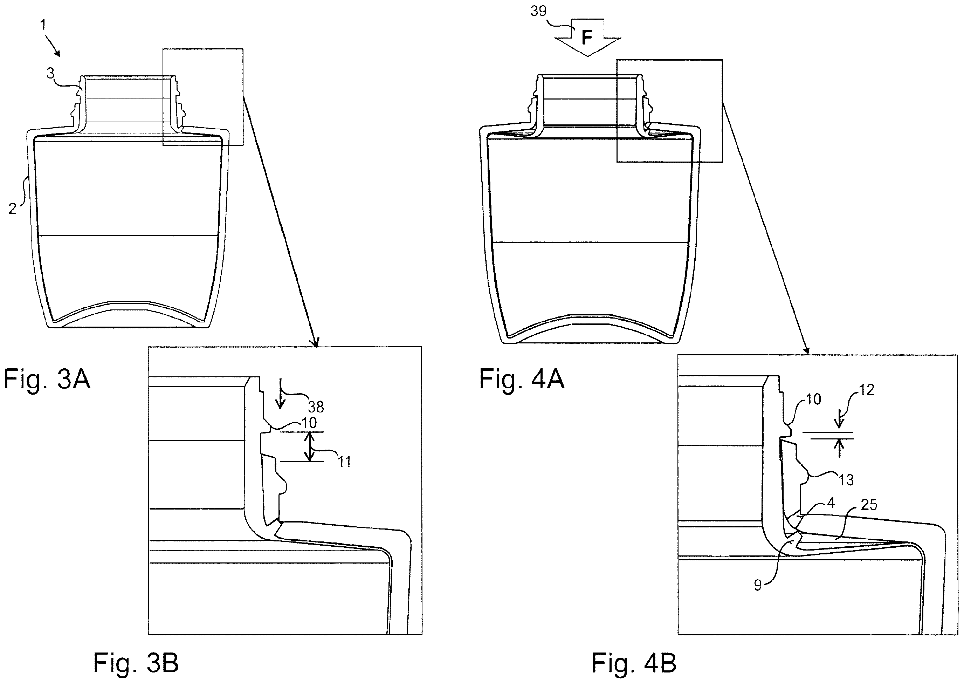

Die Figur 3A sowie der Ausschnitt der Figur 3A, dargestellt in der Figur 3B, zeigen nochmals den Spenderbehälter in einem nicht-verlagerten Zustand, das heißt, dass der erste Mündungsbereich 6 gegenüber dem zweiten Mündungsbereich 7 nicht verlagert ist.

Wie den Figuren 3A und 3B zu entnehmen ist, ist dabei der zweite Vorsprung 10, in Mündungsrichtung 8 gesehen, in einem ersten Abstand 11 zu dem zweiten Mündungsbereich 7 des Außenbehälters 2 angeordnet. Durch den Pfeil 38 ist eine Verlagerungsrichtung 38 angegeben, in welche der erste Mündungsbereich 6 verlagerbar ist. Dabei ist der erste Vorsprung mit der Druckausgleichsöffnung 4 derart verbunden, dass die Druckausgleichsöffnung 4 verschlossen ist.

Die Figur 4A sowie der Ausschnitt der Figur 4A, dargestellt in der Figur 4B, zeigen den Spenderbehälter 1 in einem verlagerten Zustand, das heißt, dass der erste Mündungsbereich 6 gegenüber dem zweiten Mündungsbereich 7 verlagert ist bzw. worden ist.

Eine Verlagerung des ersten Mündungsbereichs 6 wurde hervorgerufen durch eine Krafteinwirkung 39 auf den ersten Mündungsbereich 6 entlang der Verlagerungsrichtung 38.

Der erste Mündungsbereich 6 wird entlang der Verlagerungsrichtung 38 bzw. der Mittelachse M in das Innere des Spenderbehälters 1 gedrückt, wobei sich der erste Abstand 11 verkleinert zu einem zweiten Abstand 12.

In dem verlagerten Zustand, wie insbesondere der Figur 4B zu entnehmen ist, ist durch die Verlagerung des ersten Mündungsbereiches 6 gegenüber dem zweiten Mündungsbereich 7 ebenso der erste Vorsprung 9 verlagert worden, so dass dieser nun nicht mehr die Druckausgleichsöffnung 4 verschließt, wodurch ein Druckausgleich ermöglicht wird. Durch die Verlagerung hat sich darüber hinaus auch der Innenbehälter 3 verformt, wodurch sich ein Bereich 25 zwischen dem Innenbehälter 3 und dem Außenbehälter 2 gebildet hat.

Wird in dem verlagerten Zustand nun Fluid aus dem Spenderbehälter 1 entnommen, so wird der dadurch entstehende Unterdruck durch die Druckausgleichsöffnung 4 kompensiert, da hierdurch Außenluft in den Spenderbehälter 1 strömen kann.

Durch die Verformung des Innenbehälters 3 aufgrund der Verlagerung des ersten Mündungsbereichs 6 relativ zum zweiten Mündungsbereich 7 wurde ein Bereich 25 zwischen dem Innenbehälter 3 und dem Außenbehälter 2 gebildet, welcher mittels der Druckausgleichsöffnung 4 in Kontakt mit der Umgebung steht, da ebenso durch die Verlagerung des ersten Mündungsbereichs 6 der erste Vorsprung 9 nicht mehr die Druckausgleichsöffnung 4 verschließt.

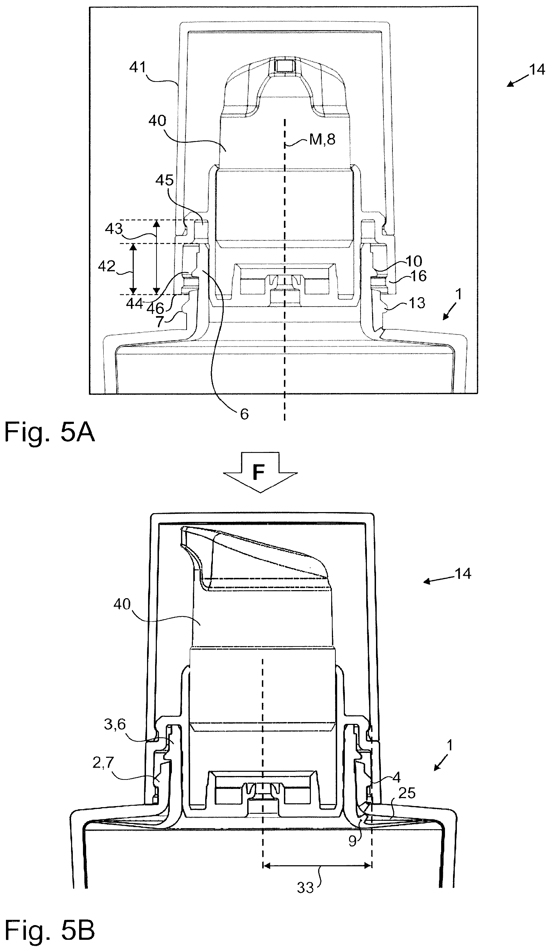

Die Figuren 5A und 5B zeigen jeweils einen Spenderbehälter 1 mit einer Pumpenvorrichtung 14 in einem Querschnitt, wobei in der Figur 5A die Pumpenvorrichtung 14 mit dem Spenderbehälter 1 noch nicht verbunden ist und in der Figur 5A die Pumpenvorrichtung 14 mit dem Spenderbehälter 1 verbunden ist. Vorzugsweise weist die Pumpenvorrichtung 14 eine Pumpe 40 auf, und weiter vorzugsweise eine Kappe 41, welche mit der Pumpe 40 derart verbunden ist, so dass die Pumpe gegenüber der Umgebung geschützt ist.

Vorteilhaft weist die Pumpenvorrichtung 14 einen ersten Aufnahmebereich 44 und einen zweiten Aufnahmebereich 45 auf, wobei sich der erste Aufnahmebereich 44 in Richtung der Mittelachse M bzw. der Mündungsrichtung 8 mit einer ersten Länge 42 erstreckt und sich der zweite Aufnahmebereich 45 mit einer zweiten Länge 43 in Richtung der Mittelachse M bzw. der Mündungsrichtung 8 erstreckt. Die Längen 42, 43 sind jeweils von einem unteren Ende 46 der Pumpenvorrichtung 14 in dieselbe Richtung aus zu sehen.

Weiter vorzugsweise sind die Aufnahmebereiche 44, 45 derart ausgebildet, so dass durch den ersten Aufnahmebereich 44 der zweite Mündungsbereich 7 und durch den zweiten Aufnahmebereich 45 der erste Mündungsbereich 6 aufgenommen werden können.

Vorzugsweise erstreckt sich der erste Mündungsbereich 6 in Mündungsrichtung 8 weiter als die zweite Länge 43 des zweiten Aufnahmebereichs 45, wodurch beim Aufprellen der Pumpenvorrichtung 14 dann hierdurch der erste Mündungsbereich 6 gegenüber dem zweiten Mündungsbereich 7 verlagert wird.

Weiter weist vorteilhaft die Pumpenvorrichtung 14 einen vierten Vorsprung 16 auf, welcher mit dem dritten Vorsprung 13 in Kontakt bringbar ist und dabei die Pumpenvorrichtung 14 gegenüber dem Spenderbehälter 1 arretiert.

Die Figur 5B zeigt die Elemente der Figur 5A, wobei hierbei die Pumpenanordnung 14 auf den Spenderbehälter 1 aufgeprellt ist. Wie zu erkennen ist, hat das Aufprellen der Pumpenvorrichtung 14 auf dem Spenderbehälter 1 eine Verlagerung des ersten Mündungsbereichs 6 relativ zu dem zweiten Mündungsbereich 7 stattgefunden, wodurch der erste Vorsprung 9 die Druckausgleichsöffnung 4 nicht mehr verschließt und wodurch sich der Bereich 25 gebildet hat.

Weiter ist zu erkennen, dass nun der dritte Vorsprung 13 mit dem vierten Vorsprung 16 in Kontakt steht, um die Pumpenvorrichtung 14 gegenüber dem Spenderbehälter 1 zu arretieren.

Es ist vorliegend zu erkennen, dass die Druckausgleichsöffnung 4 innerhalb eines Bereichs mit der ersten Strecke 33 als Radius um die Mittelachse M angeordnet ist, wobei die erste Strecke zwischen der Mittelachse M und dem, senkrecht zur der Mittelachse M gesehen, entferntesten Punkt des dritten Vorsprungs 13 angeordnet ist. Die erste Strecke 33 entspricht hierbei ebenso einem maximalen Innenradius der Pumpenvorrichtung 14. Weiter ist nun durch das Aufprellen das untere Ende 46 der Pumpenvorrichtung 14 mit dem Außenbehälter 2 in einem undichten Kontakt, das heißt, dass noch Luft von der Umgebung hindurchströmen kann. Das heißt weiter, dass die Druckausgleichsöffnung 4 durch die Pumpenvorrichtung 14 gegenüber der Umgebung geschützt ist, wodurch keine Fremdpartikel durch die Druckausgleichsöffnung 4 in den Spenderbehälter 1 gelangen können und dieser vor Beschädigungen geschützt ist.

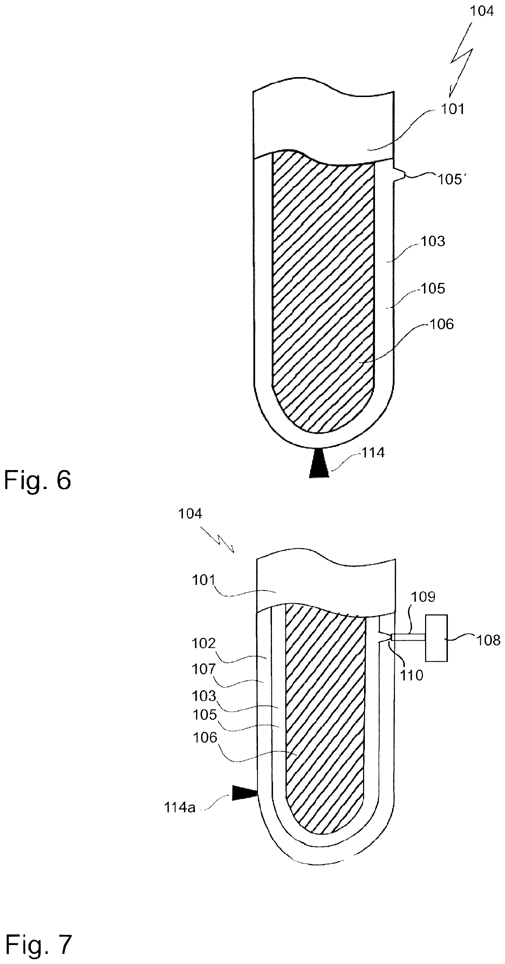

Fig. 6 zeigt einen ersten Teil einer Mehrkomponenten-Spritzgussvorrichtung 104 zum Aufspritzen eines aus wenigstens zwei Schichten 102, 103 bestehenden Vorformlings 101, wobei der Kunststoff der ersten Schicht 103 keine stoffschlüssige Verbindung mit dem Kunststoff der zweiten Schicht 102 eingeht und der Kunststoff der ersten Schicht 103 eine höhere Elastizität als der Kunststoff der zweiten Schicht 102 aufweist. Die Vorrichtung umfasst einen Spritzblaskern 106, der sich in einer ersten Kavität 105 befindet. In diese erste Kavität 105 wird eine erste Schicht 103 durch eine Zuführeinrichtung 114 eingespritzt. Die Kavität 105 weist dabei einen ersten Vorsprung bildenden Abschnitt 105' auf, welcher den ersten Vorsprung 9 des Spenderbehälters 1 bildet.

Fig. 7 zeigt eine zweite Kavität 107 der Mehrkomponenten-Spritzgussvorrichtung 104. In dieser zweiten Kavität befindet sich der Spritzblaskern 106 mit der bereits darauf aufgespritzten ersten Schicht 103. Ferner ist ein Schieberkern 108 mit einem Vorsprung 109 in die zweite Kavität 107 einbringbar, so dass der Vorsprung 109 die erste Schicht 103 berührt, und zwar genau dort, wo der erste Vorsprung 9 gebildet werden soll. Beim Einspritzen des zweiten Kunststoffs in die zweite Kavität 107 durch eine weitere Zuführeinrichtung 114a wird durch den Vorsprung des Schieberkerns ein Bereich 110 ausgespart, den die Druckausgleichsöffnung 9 bildet. Die Erfindung ist nicht auf die in den Figuren 6 und 7 gezeigten Anordnungspunkte der Zuführeinrichtungen 114, 114a an den jeweiligen Kavitäten 105, 107 beschränkt.

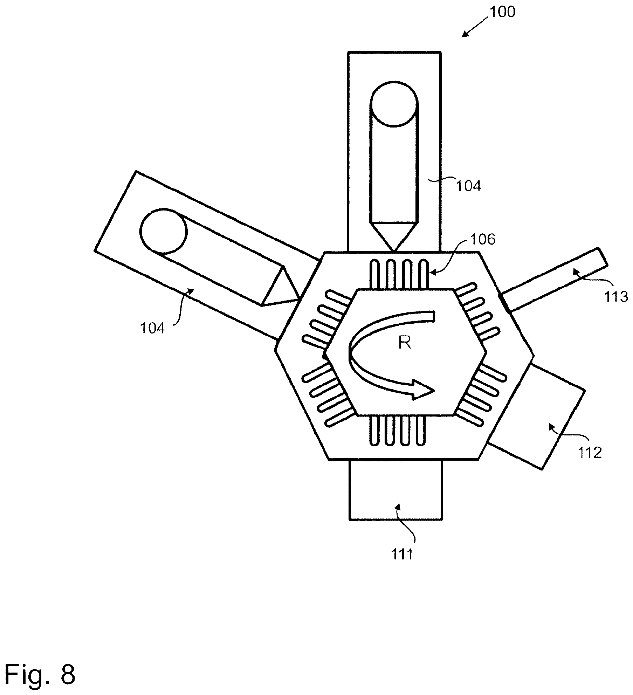

Fig. 8 zeigt schematisch die Vorrichtung 100 zur Herstellung eines Spenderbehälters 1, bestehend aus einem Außenbehälter 2 und einem Innenbehälter 3 zum Aufnehmen eines Fluids 4, im Spritzblasverfahren zum Spritzgießen eines Vorformlings 101 und zum Streckblasen des Vorformlings 101 innerhalb derselben Vorrichtung 100. Neben der Mehrkomponenten Spritzgussvorrichtung 104, die bereits in den Figuren 6 und 7 beschrieben wurde, weist die Vorrichtung 100 noch eine Streckblaseinrichtung 111 zum Streckblasen des durch einen Spritzgussprozess erwärmten und durch eine zum Streckblasen erforderliche Bearbeitungstemperatur aufweisenden Vorformlings 101. Weiterhin sind eine Kühleinrichtung 112 zum Abkühlen des expandierten Spenderbehälters 1 und eine Entnahmeeinrichtung 113 zum Ausführen des endgültigen Spenderbehälters 1 aus der Vorrichtung 100 vorhanden.

Sämtliche in den Anmeldungsunterlagen offenbarte Merkmale werden als erfindungswesentlich beansprucht, sofern sie einzeln oder in Kombination gegenüber dem Stand der Technik neu sind.

### Bezugszeichenliste

- 1: Spenderbehälter
- 2: Außenbehälter
- 3: Innenbehälter
- 4: Druckausgleichsöffnung
- 5: Bereich
- 6: erster Mündungsbereich
- 7: zweiter Mündungsbereich
- 8: Mündungsrichtung
- 9: erster Vorsprung
- 10: zweiter Vorsprung
- 11: erster Abstand
- 12: zweiter Abstand
- 13: dritter Vorsprung
- 14: Pumpenvorrichtung
- 15: Haltevorrichtung
- 16: vierter Vorsprung
- 17: Mittelbereich
- 18: Bodenbereich
- 19: erster Übergangsbereich
- 20: zweiter Übergangsbereich
- 21: Außenseite Innenbehälter
- 22: Innenseite Innenbehälter
- 23: Außenseite Außenbehälter
- 24: Innenseite Außenbehälter
- 25: Bereich
- 26: erste Dicke
- 27: zweite Dicke
- 28: Mündungsbereich
- 29: dritte Dicke
- 30: vierte Dicke
- 31: erster Innenradius
- 32: zweiter Innenradius
- 33: erste Strecke
- 34: erster Abschnitt
- 35: erster Abschnitt
- 36: zweiter Abschnitt
- 37: zweiter Abschnitt
- 38: Verlagerungseinrichtung
- 39: Kraft
- 40: Pumpe
- 41: Kappe
- 42: erste Länge
- 43: zweite Länge
- 44: erster Aufnahmebereich
- 45: zweiter Aufnahmebereich
- 46: unteres Ende
- 100: Vorrichtung
- 101: Vorformling
- 102: zweite Schicht
- 103: erste Schicht
- 104: Spritzgussvorrichtung
- 105: erste Kavität
- 105': Vorsprung bildender Bereich
- 106: Spritzblaskern
- 107: zweite Kavität
- 108: Schieberkern
- 109: Vorsprung am Schieberkern
- 110: ausgesparter Bereich in der zweiten Schicht
- 111: Streckblaseinrichtung
- 112: Kühlvorrichtung
- 113: Entnahmevorrichtung

## Patentansprüche

1. Spenderbehälter (1) bestehend aus einem Außenbehälter (2) und einem Innenbehälter (3) zum Aufnehmen eines Fluids, wobei der Außenbehälter (2) und der Innenbehälter (3) aus blasgeformten Kunststoffen gebildet sind, die keine stoffschlüssige Verbindung miteinander eingehen und ein erster Kunststoff, aus dem der Innenbehälter (3) gebildet ist, eine höhere Elastizität als ein zweiter Kunststoff, aus dem der Außenbehälter (2) gebildet ist, aufweist, so dass der Innenbehälter (3) verformbar ist, und wobei der Außenbehälter (3) wenigstens eine Druckausgleichsöffnung (4) zum Druckausgleich im Bereich (25) zwischen dem Außenbehälter (2) und dem Innenbehälter (3) aufweist,
der Innenbehälter (3) einen ersten Mündungsbereich (6) und der Außenbehälter (2) einen zweiten Mündungsbereich (7) aufweisen, wobei der erste Mündungsbereich (6) relativ zu dem zweiten Mündungsbereich (7) in einer Mündungsrichtung (8) verlagerbar ist,
**dadurch gekennzeichnet, dass**
der Innenbehälter (3) auf einer Außenseite zumindest einen komplementären ersten Vorsprung (9) zum Verschließen der Druckausgleichsöffnung (4) aufweist, welcher vor einer Verlagerung des ersten Mündungsbereichs (6) relativ zum zweiten Mündungsbereich (7) in die Druckausgleichsöffnung (4) hineinragt und mit der Druckausgleichsöffnung (4) verbunden ist und nach einer Verlagerung des ersten Mündungsbereichs (6) der erste Vorsprung (9) von der Druckausgleichsöffnung (4) gelöst ist.

2. Spenderbehälter (1) nach Anspruch 1,
**dadurch gekennzeichnet, dass**
sich der erste Mündungsbereich (6) in der Mündungsrichtung (8) zumindest teilweise weiter erstreckt als der zweite Mündungsbereich (7).

3. Spenderbehälter (1) nach einem der vorangegangenen Ansprüche,
**dadurch gekennzeichnet, dass**
der erste Mündungsbereich (6) einen zweiten Vorsprung (10) aufweist, welcher sich im Wesentlichen senkrecht zu der Mündungsrichtung (8) erstreckt und in Mündungsrichtung (8) vor der Verlagerung einen ersten Abstand (11) zu dem zweiten Mündungsbereich (7) aufweist und nach der Verlagerung einen zweiten Abstand (12) zu dem zweiten Mündungsbereich (7) aufweist, wobei der zweite Abstand (12) kleiner als der erste Abstand (11) ist.

4. Spenderbehälter nach Anspruch 3, **dadurch gekennzeichnet, dass**
der erste Abstand (11) in einem Bereich von 1-10 mm liegt.

5. Spenderbehälter (1) nach einem der vorangegangenen Ansprüche, **dadurch gekennzeichnet, dass**
der zweite Mündungsbereich (7) einen dritten Vorsprung (13) aufweist, welcher sich im Wesentlichen senkrecht zu der Mündungsrichtung (8) erstreckt.

6. Spenderbehälter (1) mit einer Pumpenvorrichtung (14), wobei die Pumpenvorrichtung auf den Spenderbehälter aufprellbar ist nach einem der Ansprüche 1-5, **dadurch gekennzeichnet, dass**
die Pumpenvorrichtung (14) derart ausgebildet ist, dass während des Aufprellens der Pumpenvorrichtung auf dem Spenderbehälter (1) eine Verlagerung des ersten Mündungsbereiches (6) relativ zu dem zweiten Mündungsbereich (7) stattfindet.

7. Spenderbehälter (1) nach Anspruch 6, I
**dadurch gekennzeichnet, dass**
eine Haltevorrichtung (15) mit einem vierten Vorsprung (16) vorgesehen ist, welcher nach dem Aufprellen mit einem dritten Vorsprung (13) mittels mindestens einem ausgewählt aus der Gruppe Snap-on-, Crimp- oder Schraubverbindungen verbunden ist.

8. Vorrichtung (100) zur Herstellung eines Spenderbehälters (1) nach einem der Ansprüche 1-6, bestehend aus einem Außenbehälter (2) und einem Innenbehälter (3) zum Aufnehmen eines Fluids, im Spritzblasverfahren zum Spritzgießen eines Vorformlings und zum Streckblasen des Vorformlings innerhalb derselben Vorrichtung, wobei die Vorrichtung umfasst:
a. eine Mehrkomponenten-Spritzgusseinrichtung (104) zum Aufspritzen des aus wenigstens zwei Schichten (102, 103) bestehenden Vorformlings (101), wobei der Kunststoff der ersten Schicht (103) keine stoffschlüssige Verbindung mit dem Kunststoff der zweiten Schicht (102) eingeht und der Kunststoff der ersten Schicht (103) eine höhere Elastizität als der Kunststoff der zweiten Schicht (102) aufweist;
b. einen Spritzblaskern (106), auf dem die den Vorformling (101) bildenden Schichten (102, 103) aufgebracht werden;
c. eine erste Kavität (105) zur Bildung der ersten Schicht (103);
d. eine zweite Kavität (107) zur Bildung einer zweiten Schicht (102), in welche ein Schieberkern (108) einbringbar ist;
e. ein Schieberkern (108) mit zumindest einem Schiebervorsprung (109), der in die zweite Kavität (107) hineinragt, wobei durch den sich in der zweiten Kavität (107) befindlichen zumindest einen Schiebervorsprung (109) des Schieberkerns (108) wenigstens ein Bereich (110) in der zweiten Schicht (102) ausgespart wird, der wenigstens eine Druckausgleichsöffnung (4) im Außenbehälter (2) darstellt;
f. eine Streckblaseinrichtung (111) zum Streckblasen des durch einen Spritzgussprozess erwärmten und eine zum Streckblasen erforderliche Bearbeitungstemperatur aufweisenden Vorformlings (101) zu dem Spenderbehälter (1),
die erste Kavität (105) und die zweite Kavität (107) derart ausgebildet sind, so dass nach dem Streckblasen eine Verlagerung des ersten Mündungsbereichs (6) relativ zum zweiten Mündungsbereich (7) durchführbar ist,
**dadurch gekennzeichnet, dass**
die erste Kavität einen Vergrößerungsbereich (105') zum Bilden eines ersten Vorsprungs (9) umfasst, wobei der Schieberkern (108) bei dem Vergrößerungsbereich (105') in die zweite Kavität hineinragt, mit diesem in Kontakt steht und derart ausgebildet ist, um die Druckausgleichsöffnung (4) zu bilden.

## Claims

1. A dispenser container (1) consisting of an outer container (2) and an inner container (3) for receiving a fluid, wherein the outer container (2) and the inner container (3) are comprised of blow-molded plastics, which do not form a material bond with each other, and a first plastic from which the inner container (3) is formed has a higher elasticity than a second plastic from which the outer container (2) is formed, so that the inner container (3) is deformable, and wherein the outer container (3) comprises at least one pressure equalization opening (4) for equalizing the pressure in the area (25) between the outer container (2) and the inner container (3),
the inner container (3) comprises a first mouth area (6) and the outer container (2) comprises a second mouth area (7), wherein the first mouth area (6) can be displaced relative to the second mouth area (7) in a mouth direction (8),
**characterized in that**
the inner container (3) comprises on an exterior side thereof at least one complementary first projection (9) for closing the pressure equalization opening (4), which protrudes into the pressure equalization opening (4) and is connected with the pressure equalization opening (4) before displacement of the first mouth area (6) relative to the second mouth area (7), and the first projection (9) is detached from the pressure equalization opening (4) after displacement of the first mouth area (6).

2. Dispenser container (1) according to claim 1,
**characterized in that**
the first mouth area (6) extends at least partially further in the mouth direction (8) than the second mouth area (7).

3. Dispenser container (1) according to one of the preceding claims,
**characterized in that**
the first mouth area (6) comprises a second projection (10), which extends essentially perpendicular to the mouth direction (8), and has a first distance (11) from the second mouth area (7) in the mouth direction (8) before the displacement, and a second distance (12) from the second mouth area (7) after the displacement, wherein the second distance (12) is less than the first distance (11).

4. Dispenser container according to claim 3,
**characterized in that**
the first distance (11) lies within a range of 1-10 mm.

5. Dispenser container (1) according to one of the preceding claims,
**characterized in that**
the second mouth area (7) comprises a third projection (13), which essentially extends perpendicular to the mouth direction (8).

6. Dispenser container (1) with a pumping device (14), wherein the pumping device can be snapped onto the dispenser container according to one of claims 1-5,
**characterized in that**
the pumping device (14) is designed in such a way that a displacement of the first mouth area (6) relative to the second mouth area (7) takes place while snapping the pumping device onto the dispenser container (1).

7. Dispenser container (1) according to claim 6,
**characterized in that**
a holding device (15) with a fourth projection (16) is provided, which after the snapping on process is connected with a third projection (13) by means of at least one of the following selected from the snap-on, crimping or screw connection group.

8. A device (100) for manufacturing a dispenser container (1) according to one of claims 1-6, consisting of an outer container (2) and an inner container (3) for receiving a fluid in an injection blow molding process for injection molding a preform and stretch blowing the preform within the same device, wherein the device comprises:
a. a multicomponent injection molding unit (104) for spraying on the preform (101) consisting of at least two layers (102, 103), wherein the plastic of the first layer (103) does not enter into any material bond with the plastic of the second layer (102), and the plastic of the first layer (103) has a higher elasticity than the plastic of the second layer (102);
b. an injection blow molding core (106), onto which the layers (102, 103) comprising the preform (101) are applied;
c. a first cavity (105) for forming the first layer (103);
d. a second cavity (107) for forming a second layer (102), into which a slide gate core (108) can be introduced;
e. a slide gate core (108) having at least one slide gate projection (109), which protrudes into the second cavity (107), wherein by means of the at least one slide gate projection (109) of the slide gate core (108) located in the second cavity (107) at least one area (110) in the second layer (102) is left out, which constitutes at least one pressure equalization opening (4) in the outer container (2);
f. a stretch blow molding unit (111) for stretch blow molding the preform (101) that was heated in an injection molding process and has the processing temperature required for stretch blow molding into the dispenser container (1),
the first cavity (105) and the second cavity (107) are designed in such a way that a displacement of the first mouth area (6) relative to the second mouth area (7) can be carried out after stretch blow molding,
**characterized in that**
the first cavity comprises a magnification area (105') to form a first projection (9), wherein the slide gate core (108) at the magnification area (105') protrudes into the second cavity, is in contact with the latter, and is designed in such a way as to form the pressure equalization opening (4).

## Revendications

1. Récipient distributeur (1), consistant dans un récipient externe (2) et un récipient interne (3) destiné à recevoir un fluide, le récipient externe (2) et le récipient interne (3) étant formés de matières plastiques moulées par soufflage, qui n'adoptent entre elles aucune liaison par matière et une première matière plastique, dans laquelle est formé le récipient interne (3) faisant preuve d'une élasticité supérieure à celle d'une deuxième matière plastique, dans laquelle est formé le récipient externe (2), de sorte que le récipient interne (3) soit déformable et le récipient externe (3) comportant au moins un orifice compensateur de pression (4) pour la compensation de pression dans la zone (25) entre le récipient externe (2) et le récipient interne (3),
le récipient interne (3) comportant une première zone d'embouchure (6) et le récipient externe (2) comportant une deuxième zone d'embouchure (7), la première zone d'embouchure (6) étant déplaçable par rapport à la deuxième zone d'embouchure (7) dans une direction d'embouchure (8),
**caractérisé**
**en ce que** le récipient interne (3) comporte sur une face extérieure au moins une première saillie (9) complémentaire, destinée à fermer l'orifice compensateur de pression (4), laquelle avant un déplacement de la première zone d'embouchure (6) par rapport à la deuxième zone d'embouchure (7) saillit à l'intérieur de l'orifice compensateur de pression (4) et est reliée avec l'orifice compensateur de pression (4) et après un déplacement de la première zone d'embouchure (6), la première saillie (9) est désolidarisée de l'orifice compensateur de pression (4).

2. Récipient distributeur (1) selon la revendication 1,
**caractérisé**
**en ce que** la première zone d'embouchure (6) s'étend au moins en partie plus loin dans la direction d'embouchure (8) que la deuxième zone d'embouchure (7).

3. Récipient distributeur (1) selon l'une quelconque des revendications précédentes,
**caractérisé**
**en ce que** la première zone d'embouchure (6) comporte une deuxième saillie (10), laquelle s'étend sensiblement à la perpendiculaire de la direction d'embouchure (8) et présente dans la direction d'embouchure (8), avant le déplacement, un premier écart (11) par rapport à la deuxième zone d'embouchure (7) et après le déplacement, un deuxième écart (12) par rapport à la deuxième zone d'embouchure (7), le deuxième écart (12) étant inférieur au premier écart (11).

4. Récipient distributeur selon la revendication 3,
**caractérisé**
**en ce que** le premier écart (11) se situe dans un ordre de 1 à 10 mm.

5. Récipient distributeur (1) selon l'une quelconque des revendications précédentes,
**caractérisé**
**en ce que** la deuxième zone d'embouchure (7) comporte une troisième saillie (13), laquelle s'étend sensiblement à la perpendiculaire de la direction d'embouchure (8).

6. Récipient distributeur (1) pourvu d'un dispositif de pompe (14), le dispositif de pompe étant encliquetable sur le récipient distributeur selon l'une quelconque des revendications 1 à 5,
**caractérisé**
**en ce que** le dispositif de pompe (14) est conçu de telle sorte que pendant l'encliquetage du dispositif de pompe sur le récipient distributeur (1), un déplacement de la première zone d'embouchure (6) par rapport à la deuxième zone d'embouchure (7) ait lieu.

7. Récipient distributeur (1) selon la revendication 6,
**caractérisé**
**en ce qu'**il est prévu un dispositif de maintien (15) pourvu d'une quatrième saillie (16), laquelle, après l'encliquetage est reliée avec une troisième saillie (13) avec au moins l'un moins sélectionné dans le groupe comprenant liaison à déclic, liaison par sertissage, liaison par vissage.

8. Dispositif (100), destiné à fabriquer un récipient distributeur (1) selon l'une quelconque des revendications 1 à 6, consistant dans un récipient externe (2) et un récipient interne (3), destiné à recevoir un fluide, par procédé de soufflage par injection, pour mouler par injection une préforme et pour étirer-souffler la préforme dans ce même dispositif, le dispositif comprenant :
a. un système de moulage par injection multicomposants (104), destiné pour l'injection de la préforme (101) consistant dans au moins deux couches (102, 103), la matière plastique de la première couche (103) n'adoptant aucune liaison par matière avec le matière plastique de la deuxième couche (102) et la matière plastique de la première couche (103) faisant preuve d'une élasticité supérieure à celle de la matière plastique de la deuxième couche (102) ;
b. un noyau de soufflage par injection (106), sur lequel on applique les couches (102, 103) formant la préforme (101) ;
c. une première cavité (105), pour former la première couche (103) ;
d. une deuxième cavité (107), pour former une deuxième couche (102), dans laquelle est insérable un noyau coulissant (108) ;
e. un noyau coulissant (108), pourvu d'au moins une saillie de coulisse (109), qui saillit à l'intérieur de la deuxième cavité (107), du fait de l'au moins une saillie de coulisse (109) du noyau coulissant (108) se trouvant dans la deuxième cavité (107), au moins une zone (110) dans la deuxième couche (102) étant évidée, qui représente au moins un orifice compensateur de pression (4) dans le récipient externe (2) ;
f. un système d'étirage-soufflage (111), destiné à étirer-souffler la préforme chauffée par un processus de moulage par injection et présentant une température d'usinage requise pour l'étirage-soufflage (101) en un récipient distributeur (1),
la première cavité (105) et la deuxième cavité (107) étant conçues de sorte qu'après l'étirage-soufflage, un déplacement de la première zone d'embouchure (6) par rapport à la deuxième zone d'embouchure (7) soit réalisable,
**caractérisé**
**en ce que** la première cavité comprend une zone d'agrandissement (105'), destinée à former une première saillie (9), près de la zone d'agrandissement (105'), le noyau coulissant (108) saillant dans la deuxième cavité, étant en contact avec celle-ci et étant conçu de sorte à former l'orifice compensateur de pression (4).
